# EUROPEAN PATENT SPECIFICATION

(11) **EP 1 616 218 B1**
(45) Date of publication and mention of the grant of the patent: **29.11.2006**
(21) Application number: 04725689.6
(22) Date of filing: 05.04.2004
(51) Int. Cl.: G02F 1/361, C07D 209/82

(54) **HYBRID ORGANIC-INORGANIC MATERIAL WITH NON-LINEAR OPTICAL RESPONSE BASED ON ORGANIC CHROMOPHORES AND PROCESS FOR THE PREPARATION THEREOF**
ORGANISCH-INORGANISCHES, AUF ORGANISCHEN CHROMOPHOREN BASIERENDES HYBRID-MATERIAL MIT NICHTLINEAREM OPTISCHEM VERHALTEN UND VERFAHREN ZU DESSEN HERSTELLUNG
MATERIAU HYBRIDE ORGANIQUE-INORGANIQUE A REPONSE OPTIQUE NON LINEAIRE FONDE SUR DES CHROMOPHORES ORGANIQUES ET PROCEDE DE PREPARATION DE CELUI-CI

(30) Priority: 18.04.2003 IT PD20030080
(43) Date of publication of application: 18.01.2006
(73) Proprietor: Universita'Degli Studi Di Milano - Bicocca, 20126 Milano (IT)
(72) Inventor: ABBOTTO, Alessandro, I-20126 Milano (IT); BEVERINA, Luca, I-20100 Milano (IT); PAGANI, Giorgio, I-20100 Milano (IT); BRUSATIN, Giovanna, I-31033 Castelfranco Veneto (IT); INNOCENZI, Plinio Univers. degII Studi di Sassari, Piazza Duomo6 07041 Alghero (SS) (IT); CASALBONI, Mauro, I-00136 Roma (IT); SARCINELLI, Felice, deceased (IT)
(74) Representative: Susanetto, Carlo
(86) International application number: PCT/EP2004/003594
(87) International publication number: WO 2004/092820

(56) References cited:
- US-A- 4 831 141
- REYES-ESQUEDA J ET AL: "Effect of chromophore-chromophore electrostatic interactions in the NLO response of functionalized organic-inorganic sol-gel materials" OPTICS COMMUNICATIONS, NORTH-HOLLAND PUBLISHING CO. AMSTERDAM, NL, vol. 198, no. 1-3, 15 October 2001 (2001-10-15), pages 207-215, XP004308644 ISSN: 0030-4018

## Description

### Technical field of the invention

The present invention concerns a material with non-linear optical response of the type with the characteristics described in the claim 1. Object of the invention is also a process for the preparation of this material.

### Background art

Materials with non-linear optical properties (known with the acronym NLO, non-linear optical) in particular of the second order, in the relevant technical field , are object of a growing interest thanks to their applications in the industry of the telecommunications and in the field of data processing.

These materials are generally composed by an interconnected matrix in which an organic chromophore compound with NLO properties (known also as NLO-phore) is hosted and can be potentially oriented when exposed to external electrical fields (poling).

The final properties of the materials, which this invention refers to, are given, in general terms, by the NLO properties of the chromophores which are used, as well as by the different ways in which they are distributed in the host matrix and the possible interactions among them.

One of the main properties that the matrix should present is to allow the incorporation of an amount of chromophores as large as possible, without the latter being subjected to aggregation phenomena.

In addition, the matrix should allow the production of the final material in the shape of films with a thickness of several microns and low optical propagation losses, and the preparation of the material at temperatures low enough to avoid the thermal degradation of the chromophores.

The host matrix must, at the same time, permit the chromophores orientation during poling, resulting in a good overall temporal stability of the material, and must endure to the exposure of intense electrical fields.

The matrix that is considered here is of the hybrid type organic-inorganic.

The use of this type of matrices presents, with respect to the matrices based on organic polymers, several advantages such as a noteworthy increase of the overall performances of the material, determined by a decrease of the optical propagation losses in the 300 - 1600 nm range, the possibility to incorporate larger amounts of chromophores, a better resistance to external agents (chemical durability), and a better resistance to scratches and abrasion. The application of hybrid matrices also allows to obtain products that can be optically polished and therefore to have a better optical quality and a better material processability both in the shape of films and bulks.

In the specific literature, several examples of application of hybrid matrixes containing organic NLO-phores which are poled by electrical fields are reported (Chaumel, F.; Jiang, H.; Kakkar, A. *Chem. Mater.* 2001, *13*, 3389; Lee, K. S.; Kim, T. D.; Min, Y. H.; Yoon, C. S. *Synth. Met.* 2001, *117,* 311; Han, S. F.; Li, Z.; Ji, S. X.; Dai, D. R.; Zhang, R. B.; Zhu, C. F.; Wang, C. J. *Sol-Gel Sci. Tech.* 2000, *18,* 137; Hou, Z. J. J.; Liu, L. Y. Y.; Xu, L.; Xu, Z. L. L.; Wang, W. C. C.; Li, F. M. M.; Ye, M. X. X. *Chem. Mater.* 1999, *11*, 3177).

Referring to the matrices of the hybrid type organic-inorganic, several procedures for preparing materials in which a chromophore is dispersed at molecular level in a host matrix are known (nanocomposite materials).

In a first process, the NLO chromophore is incorporated in the matrix by a physical entrapping process, without any main chemical bond between the matrix network and the chromophore molecule. The material obtained by this procedure, the so called "guest-host" type, has however some drawbacks, such as that the non-linear optical properties are largely unstable with time and that the maximum achievable concentration of chromophore in the host matrix is generally limited to 15-20% in weight. Beyond this limit undesirable phenomena of chromophore aggregation are observed.

A second known process envisages that covalent bonds between the chromophores and the matrix network are established either via side chain tethered bonds or along the main chain embedded bonding. The chromophores that are used are organic molecules with a high hyperpolarizability and are generally functionalized with the purpose of increasing both their polarizability and their temporal stability, for instance by controlling the chemical grafting points with the host network.

A better material efficiency, with a higher electro-optic coefficient, is achieved by an optimization of the environment surrounding the chromophore.

The achievement of a large hyperpolarizability of the matrix-chromophore system and its temporal stability is, however, modest in the systems described by the scientific literature, both because of the chromophores nature and because of the type of used hybrid matrices, that allow only a marginal increase of the overall properties of the NLO material.

The synthesis of a new promising class of chromophores with very large values of hyperpolarizability (βµ up to 27000×10⁻⁴⁸ esu at 1.9 µm) ((a) Abbotto, A.; Bradamante, S.; Facchetti, A.; Pagani, G. A. *J. Org. Chem.* 1997, *62*, 5755. (b) Abbotto, A.; Bradamante, S.; Facchetti, A.; Pagani, G. A.; Ledoux, I.; Zyss, J. *Mat. Res. Soc. Symp. Proceed.* 1998, *488,* 819), has been recently reported. These chromophores are push-pull heterocycle-based compounds with a zwitterionic ground-state. In fact, they exhibit an aromatic ground state, with a large charge separation, in palar solvents (zwitterions), and an excited state which is neutral and quinoid; this behaviour is the opposite of that to the chromophores that are generally used for second order NLO purposes, which have an aromatic and neutral ground-state.

The preparation of a material with non-linear optical response based on zwitterionic chromophores presents, however, several difficulties, since these compounds show a high tendency to photodegradation under the simultaneous action of oxygen and light, and are easily degradable in an acid environment.

In addition, due to their net charge separation, they easily tend to interact each other forming aggregates (such as dimers), that cannot be oriented, badly affecting the final NLO properties of the material. Mainly because of the latter feature it is not possible to reach high chromophore concentrations in the matrix, limiting the maximum achievable concentration to values around 5% in weight.

At these chromophore concentrations, the materials show encouraging NLO properties, however not yet high enough to build up a significant alternative to materials that are now used in the telecommunication field (such as the expensive lithium niobate).

### Disclosure of the invention

The basic problem of the present invention is to make available a material with a non-linear optical response, and a process for its preparation, which was conceived in such a way to avoid all the observed problems with reference to the cited prior art .

In the frame of this problem, a main purpose of the invention is to realize a NLO material that is stable with time and that it has a high second-order non-linear optical response.

The problem is solved and the purpose is reached by a material with a non-linear optical response and a process for its preparation, in accordance with the appended claims.

### Brief description of the drawings

The characteristics and the advantages of the present invention will become readily apparent from the detailed description of some preferred embodiments thereof, which are described by way of non limiting examples with reference to the appended drawings, in which:

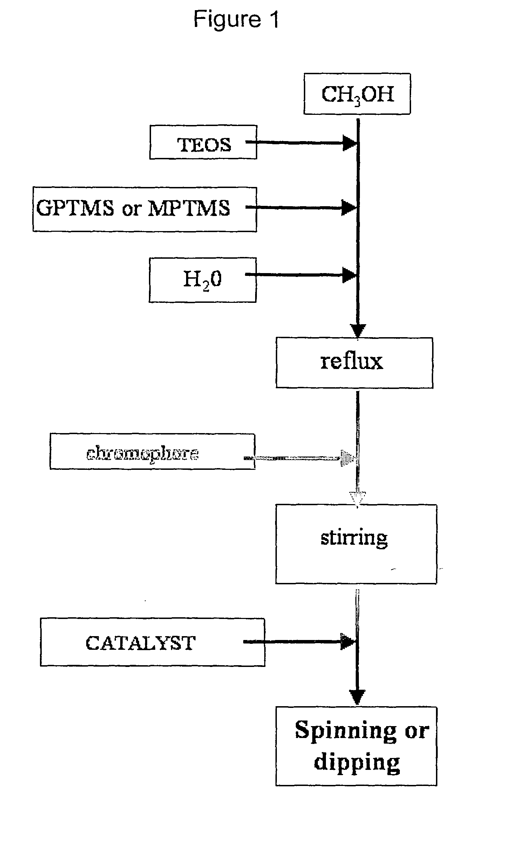

- Figure 1 is a flow chart of the process to prepare the material in accordance with the present invention;
- Figure 2 represents the structural formula of some compounds which have been used in the material according to the invention;
- Figure 3 represents a scheme of the preferred route to realize a phase of the process for the preparation of the material according to the invention;
- Figure 4 represents the UV-vis absorbance spectrum of the material according to the invention and of a comparison material.

### Best modes for carrying out the invention

The material with non-linear optical response in accordance with the invention includes a chromophore which is hosted in a matrix, in particular, a silica based organic-inorganic hybrid matrix synthesized via sol-gel.

The general process for the preparation of a material, to which this invention is referred to, typically includes the following steps:
a) Formation of a sol from alkoxides compounds;
b) Hydrolysis and condensation of this sol in acidic or basic conditions in a sol-gel reaction medium in which the chromophore has been added;
c) Removal of the residual solvent from the gel, so that a monolithic glassy material is obtained, or, in alternative, deposition of a film from a solution obtained in the previous step;
d) Exposure of the material to an electrical field (poling) with the purpose of obtaining an iso-orientation of the chromophore molecules. This step can be also performed during, or at the end, of one of the previous steps.

The chromophore has the general formula (I): 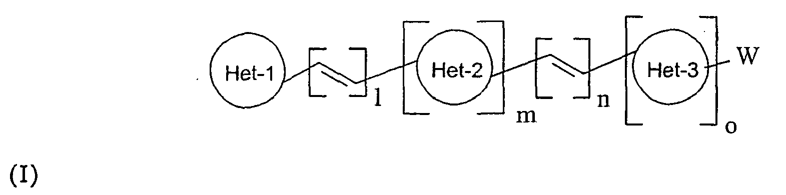 where:
- Het-1 is selected among the following heterocyclic groups: 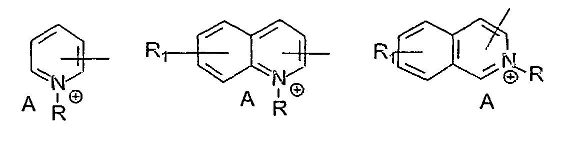 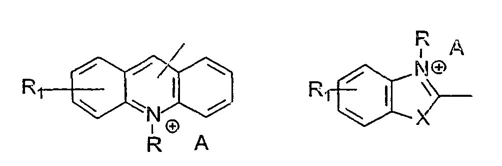 where may be O, S, Se; R and R₁ are identical or different, and are selected from the group consisting of H, alkyl groups having from 1 to 18 carbon atoms, alkoxy, aminoalkyl, alkylhalide, hydroxyalkyl, alkoxy-silane, aryloxy-silane, alkyl groups containing hydroxy and amino functionalities, alkoxyalkyl, alkylcarboxylic, alkylsulfonic, alkyl groups containing epoxy, carbonyl, carboxyl and alkoxy-carboxyl functionalities, including α,β-unsaturated groups; and A is selected among the anions alkylsulfonate, arylsulfonate, polyarenesulfonate, triflate, halide, sulfate, methosulfate, phosphate, polyphosphate;
- Het-2- and Het-3, identical or different, are selected among the following heterocyclic groups: 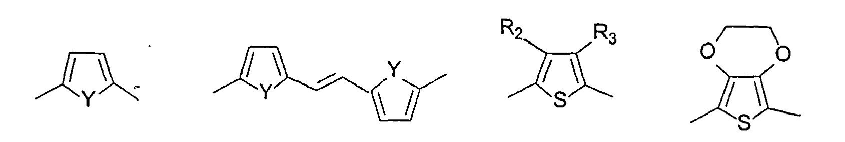 wherein Y may be O, S, and NZ with Z = H, lower alkyl, aryl; and R₂ and R₃, identical or different, are lower alkyl, lower alkoxy, hydroxyalkyl, alkoxy-silane, aryloxy-silane, and alkyl groups containing hydroxy and amino functionalities;
- W is selected from the group consisting of H, alkyl groups having from 1 to 18 carbon atoms, alkoxy, aminoalkyl, alkylhalide, hydroxyalkyl, hydroxyaryl, alcoxy-silane, aryloxy-silane, alkyl groups containing hydroxy, amino, hydrazone, azine, carbazone (such as =N-NH-CO-NH-NH₂) and carbadiazone (such as =N-NH-CO-NH-N=) functionalities, alkoxyalkyl, alkylcarboxylic, alkylsulfonic, alkyl groups containing epoxy, carbonyl, carboxyl and alkoxy-carboxyl functionalities, including α,β-unsaturated groups, and alkyl groups, also negatively charged, containing cyano functionalities, such as: 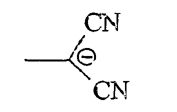 and groups, also negatively charged, containing *N*- alkylsulfonyl and *N-*arylsunfonylhydrazones, such as -CH=N-N -SO₂-Ar. When W has a negative charge the group A is omitted from structures of Het-1; and
- l,m,n, and o, each independent of the others, may be 0, 1, 2, or 3.

In particular, the most interesting compounds having general formula (I) are "push-pull" chromophores, with a zwitterionic ground-state, and with a large hyperpolarizability.

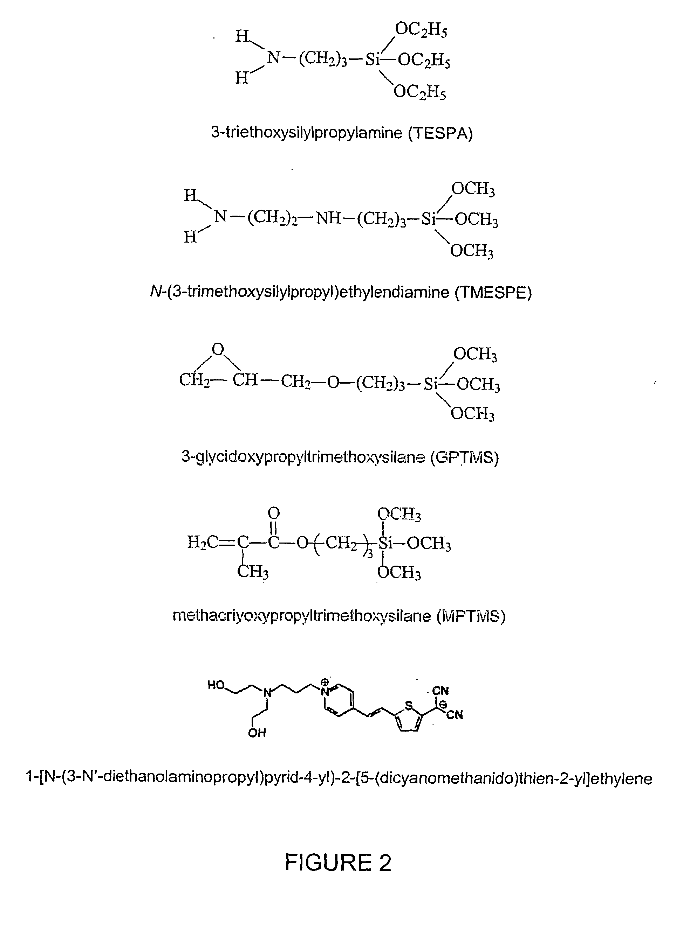

A preferred example of used chromophore is 1-[N-(3-N'-diethanolaminopropyl)pyrid-4-yl)-2-[5-(dicyanomethanido)thien-2-yl]ethylene (BisOH.PETCN), the structure of which is presented in figure 2.

This chromophore easily decomposes in an acidic environment or upon exposure to light radiation in the presence of oxygen.

In order to firmly host this type of chromophores, said matrix contains one or more multifunctional alkoxy-silane components, equal or different, having general formula (II): 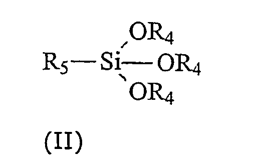 where R₄ is selected from the group consisting of H, lower alkyl (C1 -C4), aryl, and where R₅ contains from 1 to 18 carbon atoms and is selected from the group of alkyl, aryl, aminoalkyl, polyaminoalkyl, glycidoxyalkyl, alkoxy, hydroxyalkyl, methacryloxyalkyl, isocyanate, and other groups containing epoxy, alkoxycarbonyl α,β-unsaturated functionalities and one or more double or triple bonds, capable to give a subsequent polymerization or polycondensation reaction.

Other metallic alkoxides, such as alkoxides of zirconium, aluminium, tellurium, titanium, germanium, tin can be total part in the formulation.

Preferably, in combination with a compound that is generally employed to realize silica based matrices, such as the tetraethylorthosilicate (TEOS) or the tetramethoxysilane (TMOS), alkoxy-silanes of the general formula (II), selected between those presenting an organic functional side that is polymerizable or that can be polycondensed by thermal treatments or using the proper catalysts, are used.

Preferred examples of such alkoxides are the 3-glycidoxypropyltrimethoxysilane (GPTMS) and methacryloxypropyltrimethoxysilane (MPTMS) (structural formula in figure 2).

The preparation of the hybrid organic-inorganic matrix envisages, first of all, the preparation of a solution of compounds of general formula (II).

Water soluble alcohols, such the methanol, or hydrosoluble solvents such as tetrahydrofuran (THF), can be used as solvents.

The solution is preferably prepared by co-hydrolyzing GPTMS (or MPTMS) with TEOS in methanol, in the presence of water and proper hydrolysis catalysts. These catalysts are preferably basic, even if, in some cases, is possible to use acidic catalysts.

The solution so prepared is identified as precursor sol (or buffer sol GT).

An alkoxy-silane of formula (II), bearing an amine terminal group in the organic functional side (R₅), is then added to the precursor sol. Preferred examples of such compounds are 3-triethoxysilylpropylamine (TESPA) or the *N*-(3-trimethoxysilylpropyl)ethylendiamine (TMESPE), the structural formulas of which are described in figure 2.

The use of alkoxy-silanes containing amine functionalities has an important effect on the final material properties.

They play, in fact, a double role: first, they are relatively strong bases able to catalyze the sol condensation to obtain a silica gel, and then, they can react with epoxy groups possibly present in other alkoxy-silanes, for instance the GPTMS, inducing the ring opening and the following polymerization.

Last but not least, the presence of amine groups in the matrix, besides providing a favorable environment (not acidic) to zwitterionic type chromophores, protects them from the degradation by light and oxygen.

The amount of alkoxy-silane compounds bearing amine groups to be added to the first solution depends on the type of compounds and the desired gelation rate.

In the preferred embodiment in which GPTMS and MPTMS are used, the molar ratios between TESPA (or TMESPE) and GPTMS or MPTMS are generally between 0,5·10⁻² and 0,9. A preferred molar ratio is 0,67.

A second solution, in which the chromophore is dissolved in a solvent from the group previously identified in relation with the first solution, is separately prepared.

Preferably, the solvent used, due to its strong ability to solubilize the chromophore, is acetonitrile.

As an alternative, the alkoxy-silane compounds containing amine groups can be prepared with the second solution in place of being added to the buffer sol GT.

According to a main characteristic of the invention, the second solution contains also a compound of formula (III): 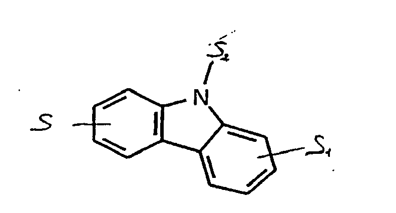 where S and S₁ are independently selected from the group consisting of H, lower alkyl and aryl, and S₂ is a linear or branched alkyl chain containing from 1 to 18 carbon atoms and at least one hydroxyl group. The alkyl chain S₂ may also contain amine groups.

The hydroxyl group of the compound of formula (III) is very important because permits the compound to be covalently bonded to the matrix.

The compound of formula (III) is, preferably, *N*-hydroxyethylcarbazole (CbOH), which is derived from the general formula imposing S ed S₁ both equal to H and S₂ equal to C₂H₄OH.

CbOH is present in the second solution in such a way that the molar ratio between the chromophore and CbOH is higher than 0.1. A composition in which the chromophore - CbOH molar ratio is in the range of 0.4 to 1 is particularly preferred.

The compounds of formula (III) allow to reach high concentrations of zwitterionic chromophores in the matrix avoiding their aggregation to dimers or higher order aggregates. In this way the potentiality of the chromophores can be fully exploited obtaining materials with very good NLO properties, as it will be better clarified hereafter.

The second solution is added to the previously described precursor sol and the mixture is allowed to react for one hour at 80 °C under reflux. The sol is allowed to react for further few hours at 30 °C.

The solution is then immediately used to deposit films on glass substrates to be electrically poled.

In alternative ITO (indium tin oxide) coated glass substrates, silicon or organic polymeric substrates, can be used.

The film is deposited by dipping and withdrawing a proper substrate at a controlled speed (*"dip-coating"*), or by depositing the solution on a substrate which is rotating at a controlled speed ("*spin-coating*"), or by spraying depositing techniques.

In alternative, a bulk material can be prepared by drying at 60 °C the solution placed in a proper container.

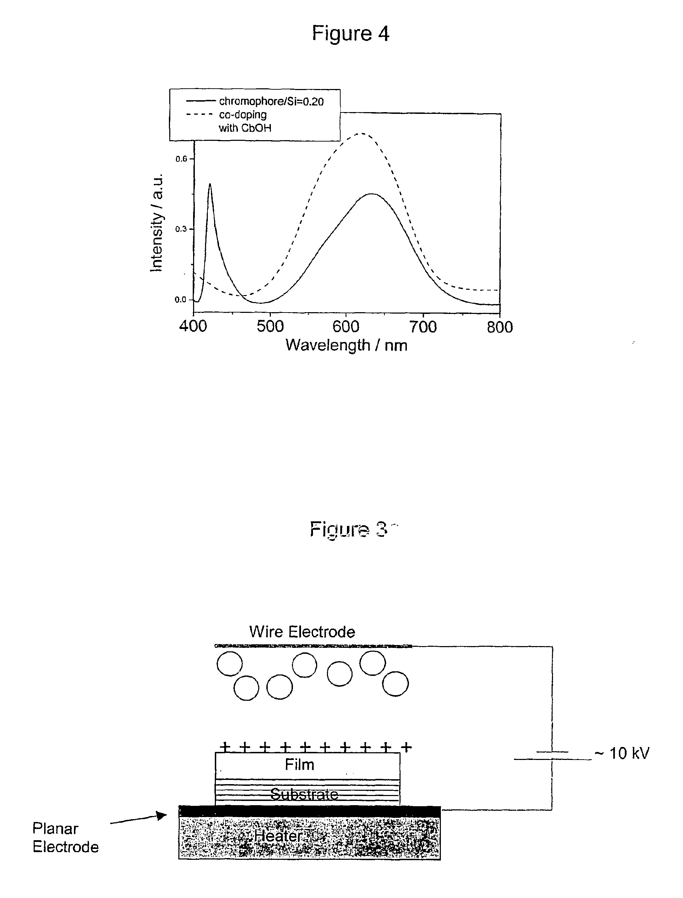

The poling process is realized by a high voltage corona poling, as depicted in Figure 3. The film is deposited on a glass substrate and is placed between two electrodes, one of them being formed by a charge layer and the other by a conducting plate.

The charge layer is generated by applying a voltage between a thin conducting wire and a conducting plate. A heater allows the matrix relaxation and therefore facilitates poling. The material shows an excellent orientation at poling temperatures in the range between 80 and 150°C, by applying the electric field for some hours.

Check of the chromophores orientation under the action of the electric field is accomplished by measuring a non-linear optical property of the system (Second Harmonic Generation), which is present only in case of chromophores orientation. When the electric field is switched off the material remains partially oriented with a high temporal stability. The sample is kept partially oriented in a controlled atmosphere during poling.

Poling is preferentially performed by using a gold wire in place of a tip, the latter being instead commonly used. In this way a uniform electric field is obtained and damage to the film is avoided.

### Example 1

Tetraethoxysilane (TEOS) and 3-glicydoxypropyltrimethoxysilane (GPTMS) are co-hydrolised in methanol (MeOH) for 4 hours under reflux at 80 °C (buffer sol GT).

The following molar ratios have been used:
MeOH:Si=1.7,
GPTMS:TEOS = 7:3,
H₂O:(TEOS+GPTMS)=1.65.

N-[(3-trimethoxysilyl)propyl]ethylenediamine) (TMESPE) has been then added to the sol of GPTMS and TEOS up to a molar ratio TMESPE : (GPTMS+TEOS) = 0.45.

The chromophore BisOH.PETCN and N-hydroxyethylcarbazole (CbOH), previously dissolved in acetonitrile, have been added to the sol obtained in the previous step so to reach the maximum molar ratio BisOH.PETCN : Si = 0.20 and BisOH.PETCN/CbOH = 0.4.

### Example 2

A solution, following the same process of the previous example, has been prepared. The used compounds and relative amounts are the same as in Example 1 with the exception of CbOH, which is not added to the solution, and for the amount of used chromophore, the molar ratio of which with silicon is 0.05. Several attempts have been done to produce films with a chromophore concentration similar to that of example 1, however films prepared in absence of CbOH with such a large amount of chromophore show an optical quality that is absolutely not acceptable for the proposed purposes.

### Example 3

Films (typical thickness 2 µm) have been deposited in a clean room by spinning with a depositing rate of 500-2000 rpm, using the solutions of the examples 1 and 2, as prepared. After the deposition, the films have been poled in situ using a proper measurement chamber containing the heater element, in order to have thermally assisted poling, and a N₂ flux, in order to control the atmosphere during the process.

The process lasted for approximately 4 hours at a temperature of about 85°C, by using the gold wire technique, with the wire being placed at a distance of around 1 cm from the film and applying a voltage of about 7000 V. The NLO properties of the material were measured by an experimental apparatus composed of a laser, some filters for the first and second harmonic, a monochromator, a phototube and an automated system of data acquisition. The non-linear coefficient d₃₃ (that is, a measure of the second order non-linear susceptibility of the material) is obtained by a calibration system composed of a "Y-cut" quartz plate.
The following results have been obtained.
The film prepared using a solution with 5% of chromophore and without CbOH (example 2) has given d₃₃ values in the range between 0,5 and 2,5 pm/V at 1.064 µm, whilst the film obtained from the solution with 20% chromophore concentration and in presence of CbOH not only showed a good optical quality, even if the chromophore has a high concentration, but also led, in a totally unexpected way, to d₃₃ values in the range between 50 and 75 pm/V at 1.064 µm.

It should be noted that a hypothetical film with 20% in weight of chromophore but without CbOH should have given, under ideal conditions, maximum values of d₃₃ between 2 and 10 pm/V, as it is directly obtained from the values measured for the film of the example 2.

Both the films from examples 1 and 2 have been subsequently analyzed through UV-visible spectroscopy, the results of which are shown in figure 4.

From this analysis it is clear that the peak due to the aggregates of BisOH.PETCN (at around 420-430 nm) is completely absent in the film of example 1, whereas the same aggregate peak is rather evident in the film relative to the example 2. This fact gives a clear explanation of the difference of d₃₃ values in the two cases, leading to the conclusion that the reason why the chromophore, even if present in the matrix in a high concentration , does not aggregate is the presence of CbOH.

Therefore, the materials obtained introducing compounds of formula (III) in the matrix permits to exploit the previously unexpressed potentialities of the zwitterionic chromophores, making available at the same time a matrix able to provide stability to the cromophores.

Therefore, the present invention achieves the proposed targets, offering at the same time a material and a process for its preparation that gives several advantages with respect to the prior art , in particular the possibility to obtain stable materials having high NLO response and minimum formation of aggregates even in presence of high chromophore concentrations.

## Claims

1. A hybrid organic inorganic material with non-linear optical response, comprising a cross-linked matrix hosting at least one organic chromophore which is dipole-orientable using an electric field, **characterized in that** it comprises an effective amount of compounds having general formula III: 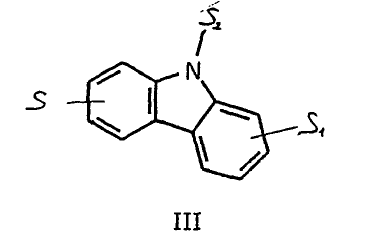 where S and S₁ are independently selected from the group consisting of H, lower alkyl, aryl, and S₂ is a linear or branched alkyl chain comprising from 1 to 18 carbon atoms and at least one hydroxyl group.

2. A material according to claim 1, wherein said compound of general formula III has S and S₁ both equal to H and S₂ equal to C₂H₄OH.

3. A material according to claim 1 o 2, wherein the molar ratio between said chromophore and said compound of formula III is higher than 0.1.

4. A material according to claim 3, wherein the molar ratio between said chromophore and said compound of formula III is in the range of 0.4 to 1.

5. A material according to any of claims 1 to 4, wherein said chromophore has the general formula I: 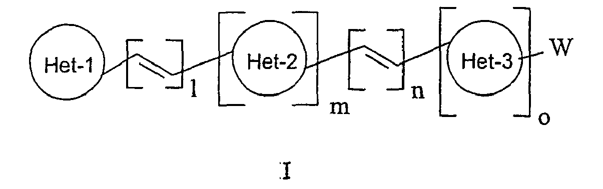 where:
- Het-1 is selected among the following heterocyclic groups: 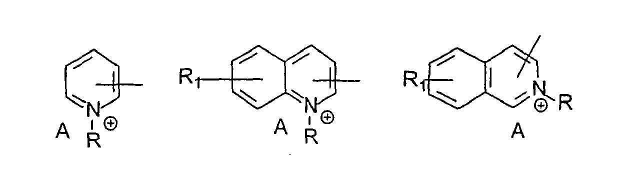 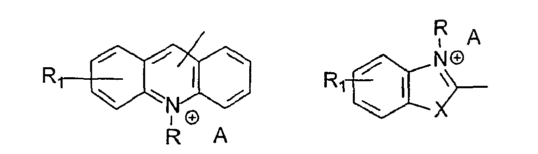 where X may be O, S, Se; R and R₁ are independently selected from the group consisting of H, alkyl groups having from 1 to 18 carbon atoms, alkoxy, aminoalkyl, alkylhalide, hydroxyalkyl, alkoxy-silane, aryloxy-silane, alkyl groups containing hydroxy and amino functionalities, alkoxyalkyl, alkylcarboxylic, alkylsulfonic, alkyl groups containing epoxy, carbonyl, carboxyl and alkoxy-carboxyl functionalities, including α,β-unsaturated groups; and A is selected among the anions alkylsulfonate, arylsulfonate, polyarenesulfonate, triflate, halide, sulfate, methosulfate, phosphate, polyphosphate; unless W has a negative charge, in which case A is omitted from structures of Het-1;
- Het-2- and Het-3 are independently selected among the following heterocyclic groups: 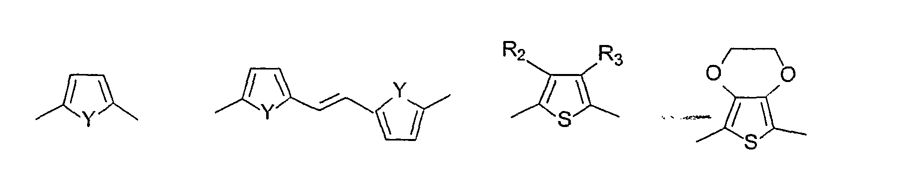 wherein Y may be O, S, and NZ with Z = H, lower alkyl, aryl; and R₂ and R₃, identical or different, are lower alkyl, lower alkoxy, hydroxyalkyl, alkoxy-silane, aryfoxy-silane, and alkyl groups containing hydroxy and amino functionalities;
- W is selected from the group consisting of H, alkyl groups having from 1 to 18 carbon atoms, alkoxy, aminoalkyl, alkylhalide, hydroxyalkyl, hydroxyaryl, alkoxy-silane, aryloxy-silane, alkyl groups containing hydroxy, amino, hydrazone, azine, carbazone of Formula =N-NH-CO-NH-NH2 and carbadiazone of Formula =N-NH-CO-NH-N= functionalities, alkoxyalkyl, alkylcarboxylic, alkylsulfonic, alkyl groups containing epoxy, carbonyl, carboxyl and alkoxy-carboxyl functionalities, including α,β-unsaturated groups, and alkyl groups, also negatively charged, containing cyano functionalities, and groups, also negatively charged, containing N- alkylsulfonyl and N-arylsunfonylhydrazones, such as -CH=N-N⁻-SO₂-Ar; and
- l,m,n, and o, each independent of the other, may be 0, 1, 2, or 3.

6. A material according to claim 5, wherein the said chromophore is of the push-pull type with a zwitterionic ground state.

7. A material according to claim 6, wherein the said chromophore is 1-[N-(3-N'-diethanolaminopropyl)pyrid-4-yl)-2-[5-(dicyanomethanido)thien-2-yl]ethylene.

8. A material according to any of the preceding claims, wherein said matrix is a hybrid organic-inorganic silica based matrix.

9. A material according to claim 8, wherein said matrix is obtainable through the sol-gel technique.

10. A material according to claim 9, wherein said matrix is obtainable from a solution containing one or more multifunctional alkoxy-silane components, equal or different, having general formula II, 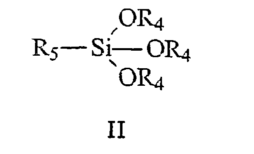 where R₄ is selected from the group consisting of H, lower alkyl C1 - C4, aryl, and where R₅ contains from 1 to 18 carbon atoms and is selected from the group of alkyl, aryl, aminoalkyl, polyaminoalkyl, glycidoxyalkyl, alkoxy, hydroxyalkyl, methacryloxyalkyl, isocyanate, and other groups containing epoxy, alkoxycarbonyl α,β-unsaturated functionalities and one or more double or triple bonds, capable to give a subsequent polymerization or polycondensation reaction.

11. A material according to claim 10, wherein said compounds of formula (II) are 3-glycidoxypropyltrimethoxysilane (GPTMS) and/or methacryloxypropyltrimethoxysilane (MPTMS).

12. A material according to any of claims 8 to 11, wherein amino groups are present in said matrix.

13. A material according to claim 12, wherein said matrix is of the type derivable from a solution comprising N-[(3-trimethoxysilyl)propyl]ethylenediamine) (TMESPE) or 3-triethoxysilyl propylamine (TESPA).

14. A process for preparing a hybrid organic inorganic material having nonlinear optical response comprising the step of providing a cross linked matrix wherein an organic chromophore is hosted, **characterized in that** a compound of general formula III 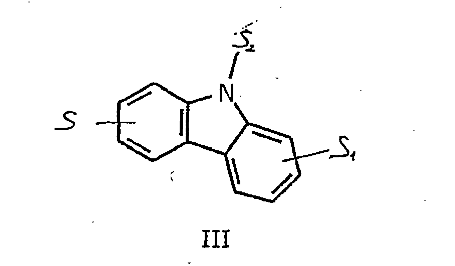 where S and S₁ are independently selected from the group consisting of H, lower alkyl, aryl, and S₂ is a linear or branched alkyl chain comprising from 1 to 18 carbon atoms and at least one hydroxyl group, is provided in said matrix.

15. A process according to claim 14, wherein said compound of general formula III has S and S₁ both equal to H and S₂ equal to C₂H₄OH.

16. A process according to claim 14 or 15, wherein said organic chromophore is a push-pull chromophore with a zwitterionic ground-state.

17. A process according to any of claims 14 to 16, wherein the following steps for the preparation of said composite are provided:
- preparing a first solution comprising tetraethylorthosilicate and at least one of said alkoxy-silane compounds of formula II 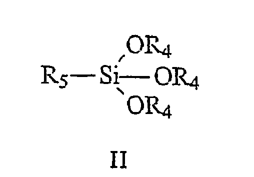 where R₄ is selected from the group consisting of H, lower alkyl C1 - C4, aryl, and where R₅ contains from 1 to 18 carbon atoms and is selected from the group of alkyl, aryl, aminoalkyl, polyaminoalkyl, glycidoxyalkyl, alkoxy, hydroxyalkyl, methacryloxyalkyl, isocyanate, and other groups containing epoxy, alkoxycarbonyl α,β-unsaturated functionalities and one or more double or triple bonds, capable to give a subsequent polymerization or polycondensation reaction, and their subsequent co-hydrolysis,
- preparing a second solution comprising said organic chromophore and said compound of formula III,
- mixing the solutions and carrying out a sol condensation reaction,
- obtaining a film or a bulk material,
- exposing said film or bulk material to electric fields to orient said chromophore in said matrix.

18. A process according to claim 17, wherein said organic chromophore is dissolved in acetonitrile.

19. A process according to claim 17 or 18, wherein tetraethylorthosilicate and 3-glycidoxypropyltrimethoxysilane (GPTMS) and/or methacryloxypropyltrimethoxysilane (MPTMS) are dissolved in said first solution.

20. A process according to any of claims 17 to 19, wherein a compound of formula II comprising an amino group is added to said first solution, in order to catalyze said hydrolysis and condensation.

21. A process according to claim 20, wherein said compound of formula II is 3-aminoethyltriethoxysilane or 3-aminopropyltriethoxysilane.

22. An electro-optic modulator **characterized in that** it comprises a hybrid organic inorganic material having nonlinear optical response of the type according to claims 1 to 13.

## Patentansprüche

1. Organisches/anorganisches Hybridmaterial mit nicht-linearer optischer Reaktion, das eine vernetzte Matrix mit mindestens einem darin befindlichen organischen Chromophor umfasst, welches mittels eines elektrischen Feldes dipol-ausrichtbar ist, **dadurch gekennzeichnet, dass** es eine wirksame Menge an Verbindungen der allgemeinen Formel III: 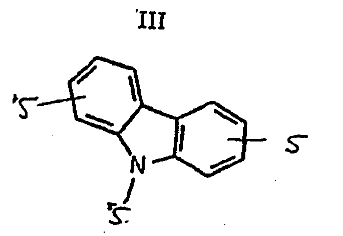 umfasst, worin S und S₁ unabhängig ausgewählt sind aus der Gruppe bestehend aus H, einem niederen Alkyl, Aryl, und S₂ eine lineare oder verzweigte Alkylkette mit 1 bis 18 Kohlenstoffatomen und mindestens einer Hydroxylgruppe ist.

2. Material nach Anspruch 1, bei dem in der Verbindung der allgemeinen Formel III S und S₁ jeweils H sind und S₂ C₂H₄OH ist.

3. Material nach Anspruch 1 oder 2, bei dem das Molverhältnis des Chromophors zu der Verbindung der Formel III höher ist als 0,1.

4. Material nach Anspruch 3, bei dem das Molverhältnis des Chromophors zu der Verbindung der Formel III im Bereich von 0,4 bis 1 liegt.

5. Material nach einem der Ansprüche 1 bis 4, bei dem der Chromophor die allgemeine Formel I: 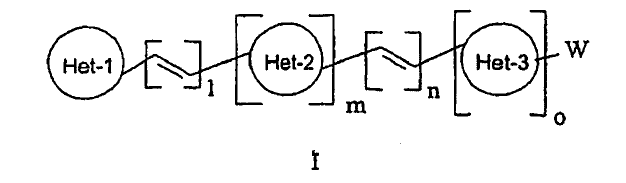 besitzt, worin
- Het-1 aus folgenden heterocyclischen Gruppen ausgewählt ist: 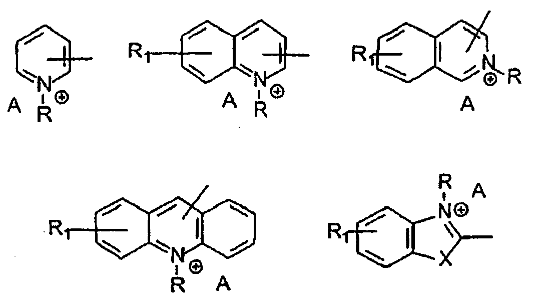 worin X O, S, Se sein kann, R und R₁ unabhängig ausgewählt sind aus der Gruppe bestehend aus H, Alkylgruppen mit 1 bis 18 Kohlenstoffatomen, Alkoxy, Aminoalkyl, Alkylhalid, Hydroxyalkyl, Alkoxysilan, Aryloxysilan, Alkylgruppen mit Hydroxy- und Aminofunktionalitäten, Alkoxyalkyl, Alkylcarboxyl, Alkylsulfon, Alkylgruppen mit Epoxy-, Carbonyl-, Carboxyl- und Alkoxycarboxylfunktionalitäten einschließlich α,β-ungesättigten Gruppen, und A ausgewählt ist aus den Anionen Alkylsulfonat, Arylsulfonat, Polyarensulfonat, Triflat, Halid, Sulfat, Methosulfat, Phosphat, Polyphosphat, außer W trägt eine negative Ladung, in welchem Falle A nicht zu den Strukturen von Het-1 zählt;
- Het-2 und Het-3 unabhängig aus folgenden heterocyclischen Gruppen ausgewählt sind: 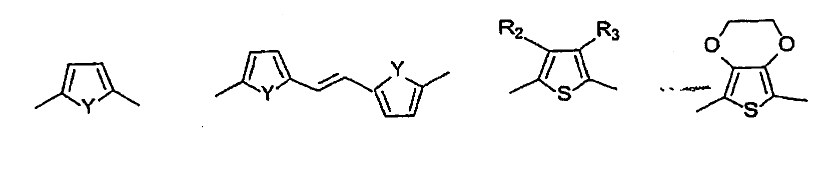 worin Y O, S und NZ mit Z = H, ein niederes Alkyl, Aryl sein kann und R₂ und R₃, die identisch oder verschieden sein können, ein niederes Alkyl, ein niederes Alkoxy, Hydroxyalkyl, Alkoxysilan, Aryloxysilan und Alkylgruppen mit Hydroxy- und Aminofunktionalitäten sind;
- W ausgewählt ist aus der Gruppe bestehend aus H, Alkylgruppen mit 1 bis 18 Kohlenstoffatomen, Alkoxy, Aminoalkyl, Alkylhalid, Hydroxyalkyl, Hydroxyaryl, Alkoxysilan, Aryloxysilan, Alkylgruppen mit Hyxdroxy-, Amino-, Hydrazon-, Azin-, Carbazon- (der Formel =N-NH-CO-NH-NH2) und Carbadiazon- (der Formel =N-NH-CO-NH-N=) Funktionalitäten, Alkoxyalkyl, Alkylcarboxyl, Alkylsulfon, Alkylgruppen mit Epoxy-, Carbonyl-, Carboxyl- und Alkoxycarboxylfunktionaliäten einschließlich α,β-ungesättigten Gruppen, (auch negativ geladenen) Alkylgruppen mit Cyanofunktionalitäten und (auch negativ geladenen) Gruppen mit N-Alkylsulfonyl- und N-Arylsulfonylhydrazonen wie z.B. -CH=N-N⁻-SO₂-Ar; und
- l, m, n und o unabhängig voneinander 0, 1, 2 oder 3 sein können.

6. Material nach Anspruch 5, bei dem der Chromophor vom Push/Pull-Typ und im Grundzustand ein Zwitterion ist.

7. Material nach Anspruch 6, bei dem der Chromophor 1-[N-(3-N'-Diethanolaminopropyl)pyrid-4-yl]-2-[5-(dicyanomethanido)thien-2-yl]ethylen ist.

8. Material nach einem der vorangegangenen Ansprüche, bei dem die Matrix eine organische/anorganische Hybridmatrix auf Siliciumdioxidbasis ist.

9. Material nach Anspruch 8, bei dem die Matrix mittels Sol-Gel-Technik gewonnen werden kann.

10. Material nach Anspruch 9, bei dem die Matrix aus einer Lösung gewonnen werden kann, die eine oder mehrere gleiche oder verschiedene multifunktionelle Alkoxysilankomponenten der allgemeinen Formel II: 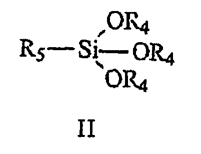 enthält, worin R₄ ausgewählt ist aus der Gruppe bestehend aus H, einem niederen Alkyl C1-C4, Aryl, und R₅ 1 bis 18 Kohlenstoffatome enthält und ausgewählt ist aus der Gruppe bestehend aus Alkyl, Aryl, Aminoalkyl, Polyaminoalkyl, Glycidoxyalkyl, Alkoxy, Hydroxyalkyl, Methacryloxyalkyl, Isocyanat und anderen Gruppen mit α,β -ungesättigten Epoxy-, Alkoxycarbonylfunktionalitäten und einer oder mehreren Doppel- oder Dreifachbindungen, so dass eine nachfolgende Polymerisations- oder Polykondensationsreaktion möglich wird.

11. Material nach Anspruch 10, bei dem die Verbindungen der Formel II 3-Glycidoxypropyltrimethoxysilan (GPTMS) und/oder Methacryloxypropyltrimethoxysilan (MPTMS) sind.

12. Material nach einem der Ansprüche 8 bis 11, bei dem Aminogruppen in der Matrix vorliegen.

13. Material nach Anspruch 12, bei dem die Matrix von dem Typ ist, der von einer Lösung aus N-[(3-Trimethoxysilyl)propyl]ethylendiamin (TMESPE) oder 3-Triethoxysilylpropylamin (TESPA) ableitbar ist.

14. Verfahren zur Herstellung eines organischen/anorganischen Hybridmaterials mit nicht-linearer optischer Reaktion, das den Schritt der Bereitstellung einer vernetzten Matrix mit einem darin befindlichen organischen Chromophor umfasst, **dadurch gekennzeichnet, dass** eine Verbindung der allgemeinen Formel III: 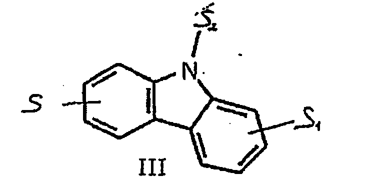 worin S und S₁ unabhängig ausgewählt sind aus der Gruppe bestehend aus H, einem niederen Alkyl, Aryl, und S₂ eine lineare oder verzweigte Alkylkette mit 1 bis 18 Kohlenstoffatomen und mindestens einer Hydroxylgruppe ist, in der Matrix bereitgestellt wird.

15. Verfahren nach Anspruch 14, bei dem in der Verbindung der allgemeinen Formel III S und S₁ jeweils H sind und S₂ C₂H₄OH ist.

16. Verfahren nach Anspruch 14 oder 15, bei dem der organische Chromophor vom Push/Pull-Typ und im Grundzustand ein Zwitterion ist.

17. Verfahren nach einem der Ansprüche 14 bis 16, bei dem zur Herstellung des Verbundstoffes folgende Schritte erfolgen:
- Herstellung einer ersten Lösung aus Tetraethylorthosilicat und mindestens einer der Alkoxysilanverbindungen der Formel II: 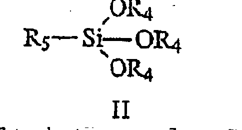 worin R₄ ausgewählt ist aus der Gruppe bestehend aus H, einem niederen Alkyl C1-C4, Aryl, und R₅ 1 bis 18 Kohlenstoffatome enthält und ausgewählt ist aus der Gruppe bestehend aus Alkyl, Aryl, Aminoalkyl, Polyaminoalkyl, Glycidoxyalkyl, Alkoxy, Hydroxyalkyl, Methacryloxyalkyl, Isocyanat und anderen Gruppen mit α,β -ungesättigten Epoxy-, Alkoxycarbonylfunktionalitäten und einer oder mehreren Doppel- oder Dreifachbindungen, so dass eine nachfolgende Polymerisations- oder Polykondensationsreaktion möglich wird,
und anschließende gleichzeitige Hydrolyse,
- Herstellung einer zweiten Lösung aus dem organischen Chromophor und der Verbindung der Formel III,
- Mischen der Lösungen und Durchführung einer Sol-Kondensationsreaktion,
- Gewinnung eines Filmmaterials oder Schüttgutes,
- Einwirkenlassen von elektrischen Feldern auf das Filmmaterial oder Schüttgut zur Ausrichtung des Chromophors in der Matrix.

18. Verfahren nach Anspruch 17, bei dem der organische Chromophor in Acetonitril gelöst wird.

19. Verfahren nach Anspruch 17 oder 18, bei dem Tetraethylorthosilicat und 3-Glycidoxypropyltrimethoxysilan (GPTMS) und/oder Methacryloxypropyltrimethoxysilan (MPTMS) in der ersten Lösung gelöst werden.

20. Verfahren nach einem der Ansprüche 17 bis 19, bei dem der ersten Lösung eine Verbindung der Formel II bestehend aus einer Aminogruppe zugesetzt wird, um Hydrolyse und Kondensation zu katalysieren.

21. Verfahren nach Anspruch 20, bei dem die Verbindung der Formel II 3-Aminopropyltriethoxysilan oder 3-Aminopropyltriethoxysilan ist.

22. Elektro-optischer Modulator, **dadurch gekennzeichnet, dass** er ein organisches/anorganisches Hybridmaterial mit nicht-linearer optischer Reaktion des in den Ansprüchen 1 bis 13 dargestellten Typs umfasst.

## Revendications

1. Matériau hybride organique-inorganique à réponse optique non linéaire, comprenant une matrice réticulée logeant au moins un chromophore organique qui est dipôle-orientable en utilisant un champ électrique, **caractérisé en ce qu'**il comprend une quantité efficace de composés ayant la formule générale III : 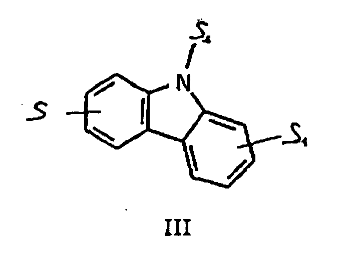 dans laquelle S et S₁ sont indépendamment choisis dans le groupe constitué par H, alkyle inférieur, aryle, et S₂ est une chaîne d'alkyle linéaire ou ramifiée comprenant de 1 à 18 atomes de carbone et au moins un groupe hydroxyle.

2. Matériau selon la revendication 1, dans lequel ledit composé de formule générale III a S et S₁ tous deux égaux à H et S₂ égal à C₂H₄OH.

3. Matériau selon la revendication 1 ou 2, dans lequel le rapport molaire entre ledit chromophore et ledit composé de formule III est supérieur à 0,1.

4. Matériau selon la revendication 3, dans lequel le rapport molaire entre ledit chromophore et ledit composé de formule III est dans la plage de 0,4 à 1.

5. Matériau selon l'une quelconque des revendications 1 à 4, dans lequel ledit chromophore a la formule générale I : 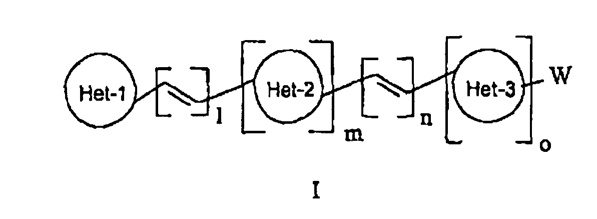 dans laquelle :
- Het-1 est choisi parmi les groupes hétérocycliques suivants : 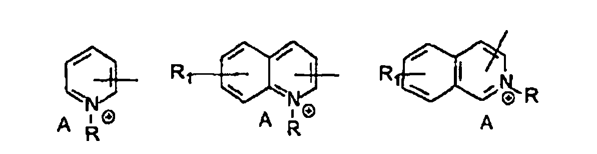 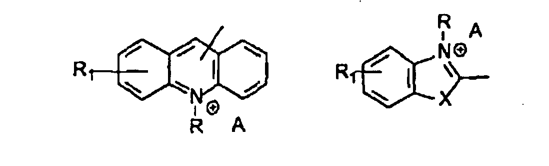 où X peut être O, S, Se ; R et R₁ sont indépendamment choisis dans le groupe constitué par H, groupes alkyle ayant de 1 à 18 atomes de carbone, groupes alcoxy, aminoalkyle, halogénure d'alkyle, hydroxyalkyle, alcoxy-silane, aryloxy-silane, alkyle contenant les fonctionnalités hydroxy et amino, groupes alcoxyalkyle, alkylcarboxylique, alkylsulfonique, alkyle contenant les fonctionnalités époxy, carbonyle, carboxyle et alcoxy-carboxyle, incluant les groupes α,β-insaturés ; et A est choisi parmi les anions alkylsulfonate, arylsulfonate, polyarènesulfonate, triflate, halogénure, sulfate, méthosulfate, phosphate, polyphosphate ; à moins que W ait une charge négative, auquel cas A est omis des structures de Het-1 ;
- Het-2- et Het-3 sont indépendamment choisis parmi les groupes hétérocycliques suivants : 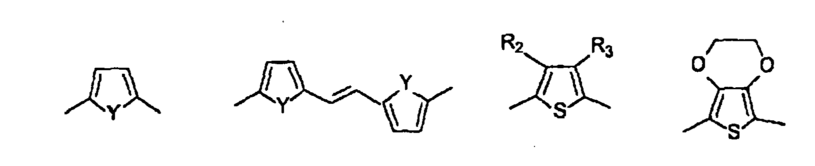 dans lesquels Y peut être O, S, et NZ avec Z = H, alkyle inférieur, aryle ; et R₂ et R₃, identiques ou différents, sont des groupes alkyle inférieur, alcoxy inférieur, hydroxyalkyle, alcoxy-silane, aryloxy-silane, et alkyle contenant les fonctionnalités hydroxy et amino ;
- W est choisi dans le groupe constitué par H, groupes alkyle ayant de 1 à 18 atomes de carbone, groupes alcoxy, aminoalkyle, halogénure d'alkyle, hydroxyalkyle, hydroxyaryle, alcoxy-silane, aryloxy-silane, alkyle contenant les fonctionnalités hydroxy, amino, hydrazone, azine, carbazone de formule =N-NH-CO-NH-NH2 et carbadiazone de formule =N-NH-CO-NH-N=, groupes alcoxyalkyle, alkylcarboxylique, alkylsulfonique, alkyle contenant les fonctionnalités époxy, carbonyle, carboxyle et alcoxy-carboxyle, incluant les groupes α,β-insaturés, et groupes alkyle, également chargés négativement, contenant les fonctionnalités cyano, et groupes, également chargés négativement, contenant N-alkylsulfonyl et N-arylsunfonylhydrazones, tels que -CH=N-N⁻-SO₂-Ar ; et
- l, m, n, et o, chacun indépendamment de l'autre, peuvent être 0, 1, 2, ou 3.

6. Matériau selon la revendication 5, dans lequel ledit chromophore est du type push-pull à niveau fondamental zwitterionique.

7. Matériau selon la revendication 6, dans lequel ledit chromophore est du 1-[N-(3-N'-diéthanolaminopropyl)pyrid-4-yl)-2-[5-(dicyanométhanido)thién-2-yl]éthylène.

8. Matériau selon l'une quelconque des revendications précédentes, dans lequel ladite matrice est une matrice hybride organique-inorganique à base de silice.

9. Matériau selon la revendication 8, dans lequel ladite matrice peut être obtenue par la technique sol-gel.

10. Matériau selon la revendication 9, dans lequel ladite matrice peut être obtenue à partir d'une solution contenant un ou plusieurs composants alcoxy-silane multifonctionnels, égaux ou différents, ayant la formule générale II 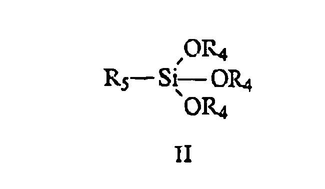 dans laquelle R₄ est choisi dans le groupe constitué par H, alkyle C1-C4 inférieur, aryle, et dans laquelle R₅ contient de 1 à 18 atomes de carbone et est choisi dans le groupe constitué par alkyle, aryle, aminoalkyle, polyaminoalkyle, glycidoxyalkyle, alcoxy, hydroxyalkyle, méthacryloxyalkyle, isocyanate, et d'autres groupes contenant les fonctionnalités époxy, alcoxycarbonyle α,β-insaturées et une ou plusieurs doubles ou triples liaisons, capables de donner une réaction de polymérisation ou de polycondensation ultérieure.

11. Matériau selon la revendication 10, dans lequel lesdits composés de formule (II) sont le 3-glycidoxypropyltriméthoxysilane (GPTMS) et/ou le méthacryloxypropyltriméthoxysilane (MPTMS).

12. Matériau selon l'une quelconque des revendications 8 à 11, dans lequel des groupes amino sont présents dans ladite matrice.

13. Matériau selon la revendication 12, dans lequel ladite matrice est du type dérivable d'une solution comprenant de la N-[(3-triméthoxysilyl)propyl]éthylènediamine) (TMESPE) ou de la 3-triéthoxysilylpropylamine (TESPA).

14. Processus de préparation d'un matériau hybride organique-inorganique à réponse optique non linéaire, comprenant l'étape qui consiste à fournir une matrice réticulée dans laquelle est logé un chromophore organique, **caractérisé en ce qu'**un composé de formule générale III : 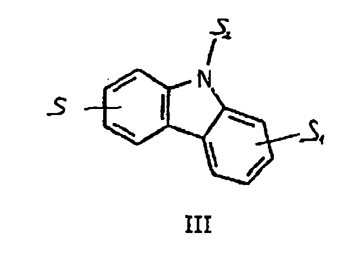 dans laquelle S et S₁ sont indépendamment choisis dans le groupe constitué par H, alkyle inférieur, aryle, et S₂ est une chaîne d'alkyle linéaire ou ramifiée comprenant de 1 à 18 atomes de carbone et au moins un groupe hydroxyle, est fourni dans ladite matrice.

15. Processus selon la revendication 14, dans lequel ledit composé de formule générale III a S et S₁ tous deux égaux à H et S₂ égal à C₂H₄OH.

16. Processus selon la revendication 14 ou 15, dans lequel ledit chromophore organique est un chromophore push-pull à niveau fondamental zwitterionique.

17. Processus selon l'une quelconque des revendications 14 à 16, dans lequel les étapes suivantes pour la préparation dudit composite sont fournies :
- la préparation d'une première solution comprenant du tétraéthylorthosilicate et au moins l'un desdits composés d'alcoxy-silane de formule II 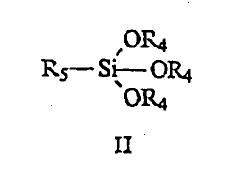
dans laquelle R₄ est choisi dans le groupe constitué par H, alkyle C1-C4 inférieur, aryle, et dans laquelle R₅ contient de 1 à 18 atomes de carbone et est choisi dans le groupe constitué par alkyle, aryle, aminoalkyle, polyaminoalkyle, glycidoxyalkyle, alcoxy, hydroxyalkyle, méthacryloxyalkyle, isocyanate, et d'autres groupes contenant les fonctionnalités époxy, alcoxycarbonyle α,β-insaturées et une ou plusieurs doubles ou triples liaisons, capables de donner une réaction de polymérisation ou de polycondensation ultérieure, et leur co-hydrolyse ultérieure,
- la préparation d'une seconde solution comprenant ledit chromophore organique et ledit composé de formule III,
- le mélange des solutions et la réalisation d'une réaction de condensation de sol,
- l'obtention d'un film ou d'un matériau en vrac,
- l'exposition dudit film ou dudit matériau en vrac à des champs électriques afin d'orienter ledit chromophore dans ladite matrice.

18. Processus selon la revendication 17, dans lequel ledit chromophore organique est dissous dans de l'acétonitrile.

19. Processus selon la revendication 17 ou 18, dans lequel du tétraéthylorthosilicate et du 3-glycidoxypropyltriméthoxysilane (GPTMS) et/ou du méthacryloxypropyltriméthoxysilane (MPTMS) sont dissous dans ladite première solution.

20. Processus selon l'une quelconque des revendications 17 à 19, dans lequel un composé de formule II comprenant un groupe amino est ajouté à ladite première solution, afin de catalyser ladite hydrolyse et ladite condensation.

21. Processus selon la revendication 20, dans lequel ledit composé de formule II est du 3-aminoéthyltriéthoxysilane ou du 3-aminopropyltriéthoxysilane.

22. Modulateur électro-optique **caractérisé en ce qu'**il comprend un matériau hybride organique-inorganique à réponse optique non linéaire du type selon les revendications 1 à 13.
